# EUROPÄISCHE PATENTSCHRIFT

(11) **EP 2 880 263 B1**
(45) Veröffentlichungstag und Bekanntmachung des Hinweises auf die Patenterteilung: **12.04.2017**
(21) Anmeldenummer: 13703999.6
(22) Anmeldetag: 05.02.2013
(51) Int. Cl.: F01D 5/02, F01D 5/28, C23C 8/08

(54) **VERFAHREN ZUM HERSTELLEN EINES TURBINENROTORS EINES ABGASTURBOLADERS**
METHOD FOR PRODUCING A TURBINE ROTOR OF AN EXHAUST GAS TURBOCHARGER
PROCÉDÉ DE PRODUCTION D'UN ROTOR DE TURBINE D'UN TURBOCOMPRESSEUR

(30) Priorität: 06.02.2012 DE 102012002283
(43) Veröffentlichungstag der Anmeldung: 10.06.2015
(73) Patentinhaber: Audi AG, 85045 Ingolstadt (DE)
(72) Erfinder: HENKER, Oliver, 02906 Quitzdorf am See (DE); STICH, Anton, 85051 Ingolstadt (DE)
(86) Internationale Anmeldenummer: PCT/EP2013/000338
(87) Internationale Veröffentlichungsnummer: WO 2013/117315

(56) Entgegenhaltungen:
- EP-A1- 2 204 466
- EP-A2- 1 462 537
- EP-A2- 1 621 774
- JP-A- 2002 332 569
- DONCHEV A ET AL: "The halogen effect for improving the oxidation resistance of TiAl-alloys", MATERIALS AT HIGH TEMPERATURES, BUTTERWORTH HEINEMANN, GUILDFORD, GB, Bd. 22, Nr. 3-4, 1. Januar 2005 (2005-01-01), Seiten 309-314, XP009089959, ISSN: 0960-3409

## Beschreibung

Die Erfindung betrifft ein Verfahren zum Herstellen eines Turbinenrotors eines Abgasturboladers, wobei der Turbinenrotor aus einem Turbinenrad mit einer Nabe und mit von der Nabe ausgehenden Turbinenschaufeln sowie einer Welle besteht.

Das Ansprechverhalten beziehungsweise der Drehmomentaufbau einer mithilfe eines Abgasturboladers aufgeladenen Brennkraftmaschine hängt maßgeblich von dem Massenträgheitsmoment des Laufzeugs des Abgasturboladers, insbesondere von dessen Turbinenrotor, ab. Der Großteil des Massenträgheitsmoments entsteht durch die Masse des Turbinenrads, welcher Bestandteil des Turbinenrotors ist. Je geringer sie ist, umso schneller kann der Drehmomentaufbau erfolgen. Entsprechend kann durch Verringerung der Masse des Turbinenrads das Ansprechverhalten der Brennkraftmaschine verbessert werden. Eine Möglichkeit, die Masse des Turbinenrads zu reduzieren, ist der Ersatz der üblicherweise verwendeten Nickel-Basislegierung, welche eine Dichte von etwa 8 g/cm³ aufweist, durch ein anderes Material mit einer geringeren Dichte. Das für das Turbinenrad verwendete Material verfügt idealerweise über vergleichbare Hochtemperatureigenschaften, insbesondere bei Temperaturen von mehr als 800°C, wie die Nickel-Basislegierungen. Materialien, welche über die genannten Eigenschaften verfügen, also insbesondere eine geringe Dichtung und gute Hochtemperatureigenschaften aufweisen, sind jedoch üblicherweise bei den in dem Abgasturbolader bedingt durch die Durchströmung mit heißem Abgas der Brennkraftmaschine auftretenden Temperaturen von mehr als 800°C nicht oxidationsbeständig. Das bedeutet, dass sie während des Betriebs des Abgasturboladers einem Oxidationsprozess ausgesetzt sind, welcher die Oberfläche des Turbinenrads negativ beeinflusst. Dies gilt insbesondere für die Turbinenschaufeln, welche unmittelbar mit dem heißen Abgas beaufschlagt sind, jedoch grundsätzlich auch für die Nabe, an der die Turbinenschaufeln angeordnet sind. Ein Verfahren gemäß dem Oberbegriff des Patentanspruchs 1 ist ferner aus der Druckschrift EP 2 204 466 A1 bekannt.

Es ist daher Aufgabe der Erfindung, ein Verfahren zum Herstellen eines Turbinenrotors eines Abgasturboladers vorzuschlagen, das zum einen kostengünstig durchführbar ist und zum anderen das Herstellen eines Turbinenrotors ermöglicht, welcher auch bei hohen Temperaturen, wie sie in dem Abgasturbolader auftreten, oxidationsbeständig ist. Dabei soll der Turbinenrotor beispielsweise aus einem Material bestehen, welches im Vergleich mit der üblicherweise verwendeten Nickel-Basislegierung eine geringere Dichte aufweist.

Dies wird erfindungsgemäß mit dem Verfahren mit den Merkmalen des Anspruchs 1 erreicht. Dieses umfasst die Schritte: Bereitstellen des aus einem ersten Material bestehenden Turbinenrads sowie der aus einem von dem ersten Material verschiedenen zweiten Material bestehenden Welle; Verbinden der Welle mit der Nabe des Turbinenrads; und Ausbilden einer Schutzschicht durch Aufbringen oder Einbringen eines Halogens auf beziehungsweise in die Oberfläche des Turbinenrads, vorzugsweise die gesamte Oberfläche, sowie anschließendes Wärmebehandeln des Turbinenrotors, wobei das Wärmebehandeln in einer Umgebung mit einem Sauerstoffpartialdruck erfolgt, der größer als ein erster Sauerstoffpartialdruck, ab welchem das erste Material oxidiert, und kleiner als ein zweiter Sauerstoffpartialdruck, ab welchem das zweite Material oxidiert, ist. Der Turbinenrotor liegt als gebauter Turbinenrotor vor. Das bedeutet, dass er sich aus dem Turbinenrad und der Welle zusammensetzt, welche getrennt voneinander ausgebildet beziehungsweise hergestellt werden. Bei dem Herstellen des Turbinenrotors erfolgt mithin ein Verbinden der Welle mit dem Turbinenrad, sodass diese nachfolgend als Einheit in Form des Turbinenrotors vorliegen. Dazu werden zunächst das Turbinenrad sowie die Welle bereitgestellt. Dieses Bereitstellen kann auch ein Herstellen umfassen, wobei das Turbinenrad insbesondere durch Gießen hergestellt wird. Das Turbinenrad besteht dabei aus dem ersten Material und die Welle aus dem zweiten Material, welches von dem ersten Material verschieden ist.

Nach dem Bereitstellen des Turbinenrads und der Welle werden diese miteinander verbunden. Insbesondere wird die Welle mit der Nabe des Turbinenrads verbunden. Anschließend wird die Schutzschicht ausgebildet. Dies erfolgt durch das Aufbringen beziehungsweise Einbringen des Halogens, wobei die Oberfläche des Turbinenrads, insbesondere die gesamte Oberfläche, mit dem Halogen behandelt wird. Das Aufbringen des Halogens kann auf beliebige Art und Weise erfolgen. Beispielsweise ist dazu ein lonenimplantationsverfahren, ein Tauchverfahren, ein Sprühverfahren oder ein Aufstreichverfahren vorgesehen. Als Ionenimplantationsverfahren kommt zur Ionenimplantation beispielsweise ein Plasma-Immersions-Ionenimplantationsverfahren, ein Beamline-Ionenimplantationsverfahren oder dergleichen zum Einsatz. Als Halogen kann insbesondere Fluor, Chlor, Brom, Jod oder eine Mischung aus diesen Elementen verwendet werden. Das Aufbringen beziehungsweise Einbringen des Halogens soll, wie bereits vorstehend festgehalten, auf beziehungsweise in die (vorzugsweise gesamte) Oberfläche des Turbinenrads, bevorzugt nicht jedoch der Welle, erfolgen.

Nach dem Aufbringen beziehungsweise Einbringen wird der gesamte Turbinenrotor, also auch die Welle, einer Wärmebehandlung unterzogen. Diese Wärmebehandlung, welche auch als thermische Aktivierung beziehungsweise Voroxidation bezeichnet werden kann, erfolgt bei mindestens 500°C bis 900°C. Während der Wärmebehandlung erfolgt die Ausbildung einer thermisch beständigen Schutzschicht. Diese schützt das Turbinenrad vor einer unzulässigen Oxidation während des Betriebs des Abgasturboladers. Während des Wärmebehandelns wird auch die Welle temperaturbeaufschlagt. Es ist daher vorgesehen, dass der Sauerstoffpartialdruck der Umgebung des Turbinenrotors derart eingestellt wird, dass er größer als der erste Sauerstoffpartialdruck und kleiner als der zweite Sauerstoffpartialdruck ist. Bei einem Sauerstoffpartialdruck, welcher größer oder gleich dem ersten Sauerstoffpartialdruck ist, oxidiert das erste Material. Entsprechendes gilt für den zweiten Sauerstoffpartialdruck und das zweite Material. Wird der Sauerstoffpartialdruck demnach derart gewählt beziehungsweise eingestellt, dass er zwar größer als der erste Sauerstoffpartialdruck, jedoch kleiner als der zweite Sauerstoffpartialdruck ist, so kann es nicht zu einer unzulässigen Oxidation der Welle kommen. Vielmehr wird die Schutzschicht lediglich auf dem Turbinenrad ausgebildet.

Eine Weiterbildung der Erfindung sieht vor, dass als erstes Material eine Titan-Aluminiumlegierung, insbesondere ein Titanaluminid, verwendet wird. In der bekannten Ausführungsform besteht das Turbinenrad aus einer Nickel-Basislegierung, welche eine Dichte von etwa 8 g/cm³ aufweist. Wie eingangs erläutert, ist es sinnvoll, die Masse des Turbinenrotors, insbesondere des Turbinenrads, soweit als möglich zu reduzieren, um die Massenträgheit zu verringern. Zu diesem Zweck eignet sich insbesondere die Titan-Aluminiumlegierung, weil diese eine deutlich geringere Dichte aufweist. Besonders bevorzugt ist das erste Material ein Titanaluminid (TiAl). Die Titan-Aluminiumlegierung weist eine Dichte von etwa 4 g/cm³ auf. Durch die Aufbringung des Halogens auf die Oberfläche des Turbinenrads aus der Titan-Aluminiumlegierung kommt es bei dem anschließenden Wärmebehandeln zu einer Ausbildung einer thermischbeständigen Al₂O₃-Schicht. Diese schützt die Titan-Aluminiumlegierung, insbesondere also das Titanaluminid, vor einer unzulässigen Oxidation während des Betriebs des Abgasturboladers.

Eine Weiterbildung der Erfindung sieht vor, dass als zweites Material Stahl verwendet wird. Die Welle besteht aus dem von dem ersten Material verschiedenen zweiten Material. Beispielsweise wird zum Erlangen einer guten Dauerlauffestigkeit des Turbinenrotors Stahl verwendet. Dieser ist vorzugsweise gehärtet beziehungsweise vergütet. Das zweite Material wird derart ausgewählt, dass der zweite Sauerstoffpartialdruck, ab welchem es oxidiert, größer ist als der erste Sauerstoffpartialdruck, ab welchem das erste Material oxidiert.

Eine Weiterbildung der Erfindung sieht vor, dass das Wärmebehandeln bei einer Temperatur von mindestens 500°C bis mindestens 900°C erfolgt. Bevorzugt erfolgt das Wärmebehandeln mit einer Temperatur, welche der während des Betriebs des Abgasturboladers erwarteten maximalen Temperatur entspricht oder diese überschreitet. Auf diese Weise wird eine weitere, wenn auch geringfügige Oxidation unmittelbar nach der Inbetriebnahme des Abgasturboladers vermieden.

Eine Weiterbildung der Erfindung sieht vor, dass die Welle vor dem Verbinden mit der Nabe wenigstens bereichsweise gehärtet wird. Obwohl es während der Wärmebehandlung zu einem Erweichen der Welle kommen kann, wenn die dabei verwendete Temperatur ausreichend groß ist, soll die Welle bereits vor dem Verbinden und damit vor der Wärmebehandlung gehärtet werden. Das Härten vor dem Verbinden hat den Vorteil, dass dieses unabhängig von dem Turbinenrad erfolgen kann, sodass beispielsweise eine Verbindungsstelle der Welle, an welcher die Verbindung zu der Nabe des Turbinenrads hergestellt wird, gehärtet werden kann.

Eine Weiterbildung der Erfindung sieht vor, dass nach dem Wärmebehandeln wenigstens ein Bereich der Welle, insbesondere wenigstens eine Lagerstelle der Welle, durch weiteres Wärmebehandeln gehärtet wird. Das Härten der Welle beziehungsweise der Lagerstelle erfolgt üblicherweise nach dem Verbinden, jedoch vor einer Endbearbeitung beziehungsweise einem Wuchten des Turbinenrotors. In diesem Fall soll das Härten nach der Wärmebehandlung erfolgen. Während der Wärmebehandlung des Turbinenrotors zur Ausbildung der Schutzschicht kann es zu einem Erweichen der Welle kommen, insbesondere wenn die Temperatur während der Wärmebehandlung die homologische Temperatur des Materials der Welle, also des zweiten Materials, übersteigt. Entsprechend muss die Vergütung der Welle nach dem Wärmebehandeln erneut hergestellt werden. Dies erfolgt durch das weitere Wärmebehandeln, welchem üblicherweise ein schnelles Abkühlen der Welle folgt.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung eines Turbinenrotors eines Abgasturboladers, welcher ein Turbinenrad mit einer Nabe und mit von der Nabe ausgehenden Turbinenschaufeln sowie eine Welle aufweist,
- Figur 2: einen Längsschnitt durch den Turbinenrotor, und
- Figur 3: ein Diagramm, in welchem Oxidationssauerstoffpartialdrücke für unterschiedliche Materialien über der Temperatur aufgetragen sind.

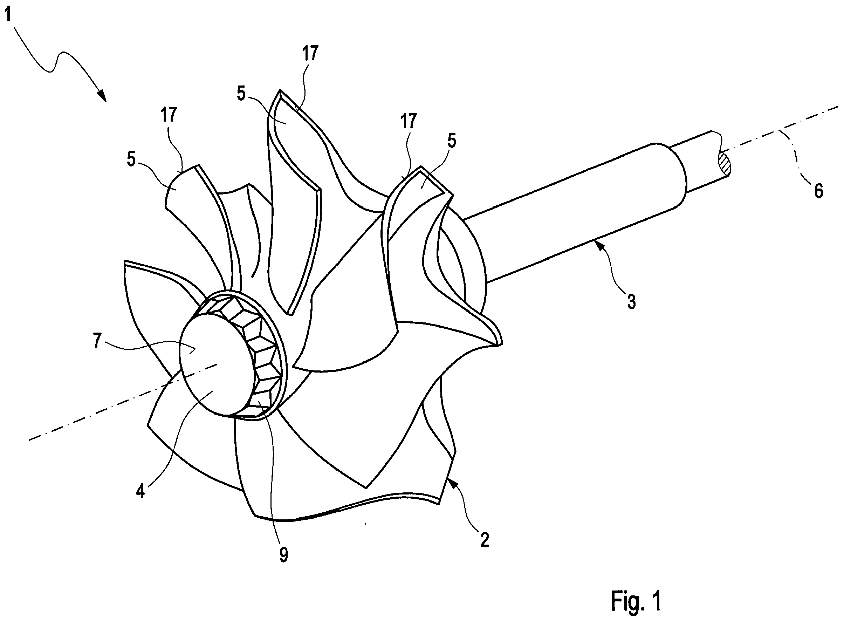

Die Figur 1 zeigt einen Turbinenrotor 1 eines nicht näher dargestellten Abgasturboladers. Der Turbinenrotor 1 besteht aus einem Turbinenrad 2 und einer Welle 3. Der Turbinenrotor 1 ist Bestandteil des Abgasturboladers, welcher einer Brennkraftmaschine zugeordnet ist. Der Turbinenrotor 1 ist üblicherweise drehbar in einem Turbinengehäuse gelagert, wobei über die Welle 3 ein Verdichterrad eines Verdichters mit dem Turbinenrad 2 wirkverbunden ist. Das Turbinenrad 2 setzt sich aus einer Nabe 4 und mehreren Turbinenschaufeln 5 zusammen, von welchen lediglich einige beispielhaft mit Bezugszeichen gekennzeichnet sind. Die Turbinenschaufeln 5 erstrecken sich - bezogen auf eine Drehachse 6 des Turbinenrotors 1 - ausgehend von der Nabe 4 in radialer Richtung nach außen. Das Turbinenrad 2 besteht beispielsweise aus einer Aluminiumlegierung, insbesondere einem Titanaluminid. Die Welle 3 besteht dagegen aus Stahl, beispielsweise niedrig legiertem Stahl, insbesondere 34CrMo₄. Die Welle 3 ist mit der Nabe 4 des Turbinenrads 2 fest verbunden. Die Nabe 4 ist im Bereich einer Nabenstirnseite 7, welche einen hier nicht erkennbaren Radrücken 8 des Turbinenrads 2 in axialer Richtung gegenüberliegt, als Vielkant beziehungsweise Mehrkant 9 ausgebildet. Dieser Vielkant 9 dient insbesondere dem Halten des Turbinenrads 2 beziehungsweise des Turbinenrotors 1 während einer Montage des Abgasturboladers.

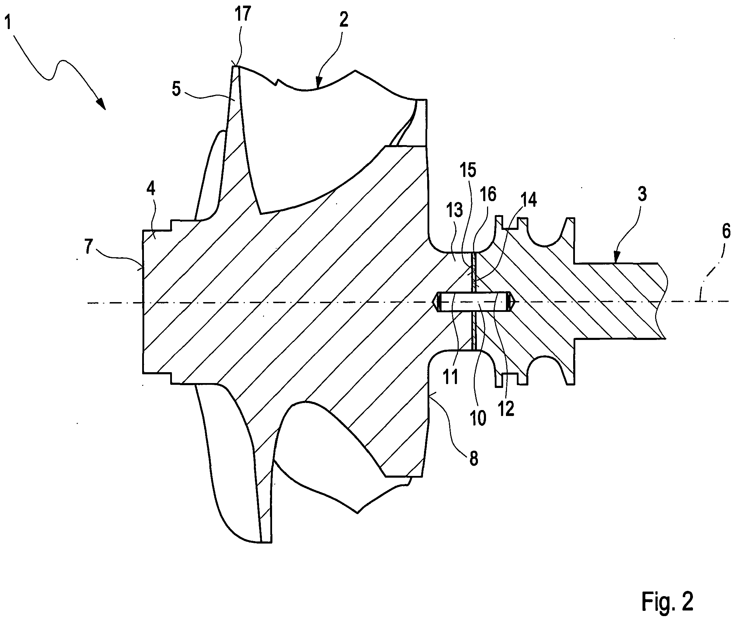

Die Figur 2 zeigt einen Längsschnitt des Turbinenrotors 1. Erkennbar sind wiederum das Turbinenrad 2 und die Welle 3. Es wird deutlich, dass das Turbinenrad 2 und die Welle 3 mithilfe eines als Zentrierstift 10 vorliegenden Befestigungsmittels miteinander verbunden sind, wobei der Zentrierstift 10 in eine Ausnehmung 11 des Turbinenrads und eine Ausnehmung 12 der Welle 3 in axialer Richtung eingreift. Die Ausnehmung 11 liegt wenigstens bereichsweise in einem Befestigungsvorsprung 13 des Turbinenrads 2 vor, welcher sich in axialer Richtung (bezüglich der Drehachse 6) ausgehend von dem Radrücken 8 in Richtung der Welle 3 erstreckt. Der Befestigungsvorsprung 13 weist eine Stirnseite 14 auf, welche im Wesentlichen parallel zu einer auf der dem Turbinenrad 2 zugewandten Seite der Welle 3 vorliegenden Stirnseite 15 liegt. Im Bereich der Stirnseiten 14 und 15 weisen der Befestigungsvorsprung 13 des Turbinenrads 2 und die Welle 3 im Wesentlichen identische oder zumindest ähnliche Durchmesser auf. Zwischen den Stirnseiten 14 und 15 kann eine Lötfolie 16 vorgesehen sein, mittels welcher eine dauerhafte Verbindung zwischen dem Turbinenrad 2 und der Welle 3 hergestellt ist. Selbstverständlich können auch andere Befestigungsarten Anwendung finden.

Bei einem Herstellen des Turbinenrotors 1 werden üblicherweise das Turbinenrad 2 und die Welle 3 separat voneinander hergestellt. Insbesondere wird das Turbinenrad 2 durch Gießen gefertigt. Beispielsweise werden bei dem Herstellen des Turbinenrotors 1 nach dem Gießen des Turbinenrads 2 eine Fügestelle des Turbinenrads 2, an welcher nachfolgend die Verbindung zu der Welle 3 hergestellt wird, sowie der Radrücken 8 mechanisch bearbeitet. Anschließend wird das Turbinenrad 2 mit der Welle 3, welche zuvor vergütet wurde, zu dem Turbinenrotor 1 zusammengefügt, wobei die Welle 3 mit dem Turbinenrad 2 verbunden wird. Nachfolgend kann wenigstens eine hier nicht dargestellte Lagerstelle der Welle 3 gehärtet werden. Dies ist jedoch optional. Anschließend wird der Turbinenrotor 1 endbearbeitet und gewuchtet. Für das Endbearbeiten und Wuchten wird mechanisch Material von dem Turbinenrotor 1 abgetragen, beispielsweise durch Schleifen oder dergleichen. Insbesondere erfolgt dabei ein Überschleifen des Vielkants 9 sowie einer Schaufelstirnseite 17 wenigstens einer der Turbinenschaufeln 5. Die Schaufelstirnseite 17 ist an einem freien Ende der Turbinenschaufel 5 ausgebildet, welches auf der der Nabe 4 abgewandten Seite der Turbinenschaufel 5 vorliegt.

Weil der Turbinenrotor 1 während des Betriebs des Abgasturboladers mit einer hohen Temperatur beaufschlagt ist, also einer hohen Temperaturbelastung unterworfen ist, soll das Turbinenrad 2 mit einer hier nicht näher dargestellten Schutzschicht versehen werden. Dies ist insbesondere dann vorgesehen, wenn das Turbinenrad 2 aus der Aluminiumlegierung, beispielsweise dem Titanaluminid, besteht. In diesem Fall ist es von besonderer Bedeutung, dass das Turbinenrad 2 vor unerwünschter Oxidation geschützt wird, welche durch die hohe Temperaturbelastung verursacht wird. Zur Herstellung der Beschichtung soll zunächst ein Halogen auf beziehungsweise in die Oberfläche des Turbinenrads 2 aufgebracht beziehungsweise eingebracht werden. Dies erfolgt für zumindest einen Bereich der Oberfläche, bevorzugt jedoch für die gesamte Oberfläche. Anschließend wird der Turbinenrotor 1 wärmebehandelt, um die Schutzschicht auszubilden.

Wird diese Wärmebehandlung durchgeführt, nachdem die Welle 3 mit dem Turbinenrad 2 verbunden wurde, so wird die Welle 3 einer Temperaturbelastung ausgesetzt, durch welche es unter Umständen zu einer unerwünschten Oxidation der Welle 3 kommen kann. Aus diesem Grund sollte bei dem Herstellen des Turbinenrotors 1 wie folgt vorgegangen werden: Zunächst werden das Turbinenrad 2 und die Welle 3 bereitgestellt, wobei diese separat voneinander ausgebildet beziehungsweise hergestellt werden. Das Turbinenrad 2 besteht dabei aus einem ersten Material, die Welle 3 aus einem zweiten Material, welches von dem ersten Material verschieden ist. Anschließend wird das Halogen auf beziehungsweise in die Oberfläche des Turbinenrads 2 eingebracht und anschließend der gesamte Turbinenrotor 1 wärmebehandelt. Während der Wärmebehandlung des Turbinenrotors bildet sich durch Oxidation die Schutzschicht auf dem Turbinenrad 2 auf. Um gleichzeitig die unerwünschte Oxidation der Welle 3 zu vermeiden, wird das Wärmebehandeln in einer Umgebung durchgeführt, welche einen bestimmten Sauerstoffpartialdruck aufweist, der größer ist als ein erster Sauerstoffpartialdruck und kleiner als ein zweiter Sauerstoffpartialdruck.

Der erste Sauerstoffpartialdruck entspricht demjenigen Sauerstoffpartialdruck, bei dessen Erreichen beziehungsweise Überschreiten das erste Material bei der eingestellten Temperatur oxidiert. Der zweite Sauerstoffpartialdruck ist dagegen derjenige Sauerstoffpartialdruck, bei dessen Erreichen oder Überschreiten das zweite Material bei der eingestellten Temperatur oxidiert. Entsprechend soll nun, um das Oxidieren der Welle 3 zu vermeiden, der Sauerstoffpartialdruck in der Umgebung derart gewählt sein, dass er kleiner ist als der zweite Sauerstoffpartialdruck. Gleichzeitig soll er jedoch größer als der erste Sauerstoffpartialdruck sein, um das Beschichten des Turbinenrads 2 zu ermöglichen. In der Umgebung des Turbinenrotors 1 wird demnach sowohl eine bestimmte Temperatur als auch der bestimmte Sauerstoffpartialdruck eingestellt, wobei der erste Sauerstoffpartialdruck und der zweite Sauerstoffpartialdruck von der eingestellten Temperatur abhängig sind.

Nach dem Wärmebehandeln des Turbinenrotors 1 erfolgt - soweit gewünscht - das wenigstens bereichsweise Härten der Welle 3 beziehungsweise wenigstens einer Lagerstelle der Welle 3. Dies erfolgt durch weiteres Wärmebehandeln, an welche sich vorzugsweise ein schnelles Abkühlen zumindest der Welle 3 anschließt. Anschließend wird die Endbearbeitung beziehungsweise das Wuchten des Turbinenrotors 1 durchgeführt. Zu diesem Zweck wird Material von dem fertigen Turbinenrotor 1 abgetragen, insbesondere im Bereich der Nabenstirnseite 7 beziehungsweise des Vielkants 9. Auch von der Schaufelstirnseite 17 wird üblicherweise Material abgetragen. Entsprechend wird in diesen Bereichen die Schutzschicht wieder entfernt. Daher ist es vorgesehen, die Schutzschicht an der Schaufelstirnseite 17 durch erneutes Wärmebehandeln wieder auszubilden. Dieses erneute Wärmebehandeln kann insbesondere durch einen Betrieb des Abgasturboladers erfolgen. Bei diesem wird durch noch in dem Turbinenrad 2 enthaltenes Halogen die Schutzschicht, insbesondere in Form der Al₂O₃-Schutzschicht, hergestellt. Entsprechend ist es besonders bevorzugt vorgesehen, dass das Entfernen der Schutzschicht von der Schaufelstirnseite 17 derart erfolgt, dass die Bearbeitungstiefe geringer ist als die Eindringtiefe des Halogens in das Material des Turbinenrads 2. Das Halogen kann prinzipiell beliebig gewählt sein. Besonders bevorzugt wird jedoch Fluor, Chlor, Brom, Jod oder eine Mischung aus diesen Elementen verwendet. Das Aufbringen beziehungsweise Einbringen des Halogens kann durch ein Ionenimplantationsverfahren, ein Tauchverfahren, ein Sprühverfahren, ein Aufstreichverfahren oder dergleichen erfolgen.

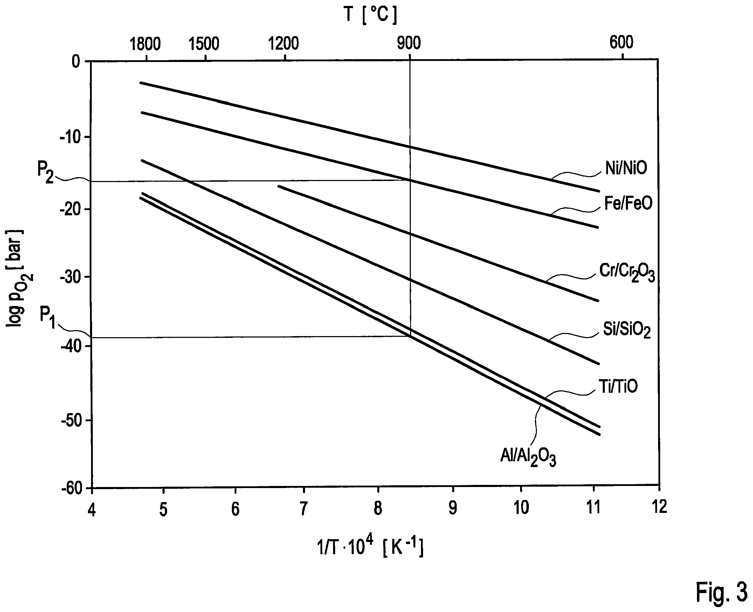

Die Figur 3 zeigt ein Diagramm, in welchem für unterschiedliche Materialien die Abhängigkeit des Oxidationssauerstoffpartialdrucks über der Temperatur aufgetragen ist. Hinter dem jeweiligen Material ist zusätzlich das Produkt des Oxidationsprozesses angegeben. Der Oxidationssauerstoffpartialdruck p_{O2} des Sauerstoffs (O₂) ist dabei in der Einheit bar und die Temperatur in der Einheit Grad Celsius beziehungsweise der Kehrwert der Temperatur in der Einheit K⁻¹ angegeben. Der Oxidationssauerstoffpartialdruck bezeichnet denjenigen Sauerstoffpartialdruck, bei dessen Erreichen oder Überschreiten das jeweilige Material bei der Temperatur T einem Oxidationsprozess unterzogen wird. Bei Einstellen einer bestimmten Temperatur und dem entsprechenden Oxidationssauerstoffpartialdruck des entsprechenden Materials findet also eine Oxidation des Materials statt. Aus dem Diagramm wird deutlich, dass der Oxidationssauerstoffpartialdruck für Aluminium (Al) für eine bestimmte Temperatur geringer ist als die für Eisen (Fe).

Ein erster Sauerstoffpartialdruck p₁ entspricht dem Oxidationssauerstoffpartialdruck eines ersten Materials bei einer bestimmten Temperatur. Ein zweiter Sauerstoffpartialdruck entspricht dem Oxidationssauerstoffpartialdruck eines zweiten Materials bei derselben Temperatur. Dies ist in dem Diagramm beispielhaft für eine Temperatur T = 900°C dargestellt. Das erste Material ist dabei Aluminium, das zweite Material Eisen beziehungsweise Stahl. Es wird deutlich, dass der erste Sauerstoffpartialdruck niedriger ist als der zweite Sauerstoffpartialdruck. Entsprechend wird bei der eingestellten Temperatur in einer Umgebung, in welcher ein Sauerstoffpartialdruck vorliegt, der größer ist als der erste Sauerstoffpartialdruck, jedoch kleiner als der zweite Sauerstoffpartialdruck, das erste Material, nämlich Aluminium, oxidieren, während das zweite Material, nämlich Eisen, nicht oxidiert. Entsprechend soll das Wärmebehandeln des Turbinenrotors 1 in einer Umgebung erfolgen, in welcher ein Sauerstoffpartialdruck eingestellt ist, der größer ist als der erste Sauerstoffpartialdruck und kleiner als der zweite Sauerstoffpartialdruck bei vorgegebener Temperatur.

### BEZUGSZEICHENLISTE

- 1: Turbinenrotor
- 2: Turbinenrad
- 3: Welle
- 4: Nabe
- 5: Turbinenschaufel
- 6: Drehachse
- 7: Nabenstirnseite
- 8: Radrücken
- 9: Vielkant
- 10: Zentrierstift
- 11: Ausnehmung
- 12: Ausnehmung
- 13: Befestigungsvorsprung
- 14: Stirnseite
- 15: Stirnseite
- 16: Lötfolie
- 17: Schaufelstirnseite
- 18: Vorrichtung
- 19: 1. Kammer
- 20: 2. Kammer
- 21: Gehäuse
- 22: Isolierung
- 23: Heizvorrichtung

## Patentansprüche

1. Verfahren zum Herstellen eines Turbinenrotors (1) eines Abgasturboladers, wobei der Turbinenrotor (1) aus einem Turbinenrad (2) mit einer Nabe (4) und mit von der Nabe (4) ausgehenden Turbinenschaufeln (5) sowie einer Welle (3) besteht, mit den Schritten:
- Bereitstellen des aus einem ersten Material bestehenden Turbinenrads (2) sowie der aus einem von dem ersten Material verschiedenen zweiten Material bestehenden Welle (3), wobei als erstes Material eine Titan-Aluminiumlegierung, insbesondere ein Titanaluminid, verwendet wird; und
- Verbinden der Welle (3) mit der Nabe (4) des Turbinenrads (2);
**gekennzeichnet durch** den Schritt:
- Ausbilden einer Schutzschicht **durch** Aufbringen oder Einbringen eines Halogens auf beziehungsweise in die Oberfläche des Turbinenrads (2) sowie anschließendes Wärmebehandeln des Turbinenrotors (1), wobei das Wärmebehandeln in einer Umgebung mit einem Sauerstoffpartialdruck erfolgt, der größer als ein erster Sauerstoffpartialdruck, ab welchem das erste Material oxidiert, und kleiner als ein zweiter Sauerstoffpartialdruck, ab welchem das zweite Material oxidiert, ist.

2. Verfahren nach Anspruch 1, **dadurch gekennzeichnet, dass** als zweites Material Stahl verwendet wird.

3. Verfahren nach einem der vorhergehenden Ansprüche, **dadurch gekennzeichnet, dass** das Wärmebehandeln bei einer Temperatur von mindestens 500°C bis mindestens 900°C erfolgt.

4. Verfahren nach einem der vorhergehenden Ansprüche, **dadurch gekennzeichnet, dass** die Welle (3) vor dem Verbinden mit der Nabe (4) wenigstens bereichsweise gehärtet wird.

5. Verfahren nach einem der vorhergehenden Ansprüche, **dadurch gekennzeichnet, dass** nach dem Wärmebehandeln wenigstens ein Bereich der Welle (3), insbesondere wenigstens eine Lagerstelle der Welle (3), durch weiteres Wärmebehandeln gehärtet wird.

## Claims

1. Method for producing a turbine rotor (1) of an exhaust gas turbocharger, wherein the turbine rotor (1) comprises a turbine wheel (2) with a hub (4) and turbine blades (5) that extend from the hub (4), and a shaft (3), said method comprising the steps of:
providing the turbine wheel (2), which is made of a first material, and a shaft (3) made from a second material that is different from the first material, wherein a titanium-aluminium alloy, in particular a titanium aluminide, is used as the first material; and
- connecting the shaft (3) to the hub (4) of the turbine wheel (2);
**characterised by** the step of:
- forming a protective layer by applying or introducing a halogen on or in the surface of the turbine wheel (2) and subsequently heat-treating the turbine rotor (1), wherein the heat treatment is carried out in an environment having an oxygen partial pressure which is greater than a first oxygen partial pressure from which the first material is oxidized and is less than a second oxygen partial pressure from which the second material is oxidized.

2. Method according to Claim 1, **characterised in that** steel is used as the second material.

3. Method according to either of the preceding claims, **characterised in that** the heat-treatment is carried out at a temperature of at least 500°C to at least 900°C.

4. Method according to any one of the preceding claims, **characterised in that** the shaft (3) is hardened at least in certain sections before connection to the hub (4).

5. Method according to any one of the preceding claims, **characterised in that** after heat-treatment, at least one region of the shaft (3), in particular at least one bearing position of the shaft (3), is hardened by further heat treatment.

## Revendications

1. Procédé pour fabriquer un rotor de turbine (1) d'un turbocompresseur, dans lequel le rotor de turbine (1) est constitué d'une roue de turbine (2) avec un moyeu (4) et avec des ailettes de turbine (5) partant du moyeu (4) ainsi que d'un arbre (3), avec les étapes suivantes :
- fournir la roue de turbine (2) constituée d'un premier matériau ainsi que l'arbre (3) constitué d'un deuxième matériau différent du premier matériau, un alliage de titane et d'aluminium, notamment un aluminure de titane, étant utilisé comme premier matériau ; et
- assembler l'arbre (3) au moyeu (4) de la roue de turbine (2) ;
**caractérisé par** l'étape suivante :
- former une couche protectrice en appliquant ou introduisant un halogène sur ou dans la surface de la roue de turbine (2) ainsi qu'effectuer ensuite un traitement thermique du rotor de turbine (1), le traitement thermique s'effectuant dans un environnement avec une pression partielle d'oxygène qui est supérieure à une première pression partielle d'oxygène à partir de laquelle le premier matériau s'oxyde et inférieure à une deuxième pression partielle d'oxygène à partir de laquelle le deuxième matériau s'oxyde.

2. Procédé selon la revendication 1, **caractérisé en ce que** de l'acier est utilisé comme deuxième matériau.

3. Procédé selon l'une des revendications précédentes, **caractérisé en ce que** le traitement thermique s'effectue à une température d'au moins 500 °C à au moins 900 °C.

4. Procédé selon l'une des revendications précédentes, **caractérisé en ce que** l'arbre (3) est trempé au moins par endroits avant l'assemblage au moyeu (4).

5. Procédé selon l'une des revendications précédentes, **caractérisé en ce que,** après le traitement thermique, au moins une zone de l'arbre (3), notamment au moins un point d'appui de l'arbre (3), est trempée par un nouveau traitement thermique.
